# NEUE EUROPÄISCHE PATENTSCHRIFT

(11) **EP 2 342 571 B2**
(45) Veröffentlichungstag und Bekanntmachung des Hinweises auf die Entscheidung über den Einspruch: **25.02.2026**
(45) Hinweis auf die Patenterteilung: 14.01.2015
(21) Anmeldenummer: 09749002.3
(22) Anmeldetag: 28.10.2009
(51) Int. Cl.: G01P 1/00, G01P 1/02, G01D 5/244, G01D 11/30

(54) **VORRICHTUNG ZUR SELBSTJUSTAGE UND VERFAHREN ZUR ANORDNUNG EINES IMPULSDREHZAHLGEBERS IN BEZUG AUF EINEN ROTOR**
DEVICE FOR SELF-ADJUSTING AND METHOD FOR ARRANGING AN IMPULSE TRANSMITTER IN RELATION TO A ROTOR
DISPOSITIF D'AUTO-AJUSTAGE ET PROCÉDÉ DE DISPOSITION D'UN TRANSMETTEUR DE VITESSE DE ROTATION PAR IMPULSIONS PAR RAPPORT À UN ROTOR

(30) Priorität: 30.10.2008 DE 102008054000
(43) Veröffentlichungstag der Anmeldung: 13.07.2011
(73) Patentinhaber: KNORR-BREMSE Systeme für Nutzfahrzeuge GmbH, 80809 München (DE)
(72) Erfinder: SCHLEYER, Mathias, 87435 Kempten (DE)
(74) Vertreter: Wiedemann, Markus
(86) Internationale Anmeldenummer: PCT/EP2009/007699
(87) Internationale Veröffentlichungsnummer: WO 2010/049132

(56) Entgegenhaltungen:
- EP-A1- 0 134 209
- EP-A2- 0 183 333
- EP-A2- 1 284 424
- CA-A1- 2 405 671
- DE-A1- 102005 005 331
- DE-A1- 2 111 499
- DE-A1- 2 144 162
- DE-A1- 2 443 862
- DE-A1- 2 928 610
- DE-A1- 3 229 207
- DE-C2- 2 243 331
- DE-C3- 2 452 898
- DE-U- 7 342 182
- US-A- 4 612 501
- US-A- 5 922 953
- US-A1- 2003 096 673

## Beschreibung

Die Erfindung betrifft eine Vorrichtung zur Selbstjustage eines Impulsdrehzahlgebers in Bezug auf einen Rotor. Dabei weist die Vorrichtung einen Impulsdrehzahlgeber mit einem zylindrischen Sensorkopf und einem Adapter zu einem Mess- und Versorgungskabel auf. Eine elastische Klemmhülse, die den zylindrischen Sensorkopf radial umfasst, ist kraftschlüssig in einer Bohrung einer Halterung angeordnet, wobei die Klemmhülse einen Presssitz des Sensorkopfes in der Bohrung bildet.

Eine derartige Vorrichtung mit Presssitz für einen zylindrischen Sensorkopf eines Impulsdrehzahlgebers ist für passive Impulsdrehzahlgeber, wie z.B. induktive Impulsdrehzahlgeber, bekannt, wobei sich der zylindrische Sensorkopf in der Klemmhülse verdrehen kann, ohne dass das Messergebnis maßgeblich beeinflusst oder geändert wird.

Für aktive Impulsdrehzahlgeber, deren Messergebnis orientierungsabhängig ist und die beispielsweise mit Hall-Sensoren arbeiten, sind jedoch Halterungen gegenüber einem Rotor oder Polrad vorgesehen, die eine Schraubverbindung zwischen Halterung und Sensorkopf aufweisen, die weder eine Verdrehung noch eine axiale Verschiebung des zylindrischen aktiven und orientierungsabhängigen Sensorkopfes zulassen.

Aus der Druckschrift US 5,922,953 ist eine Vorrichtung bekannt, die mit einem orientierungsabhängigen Hall-Sensor arbeitet, wobei der Querschnitt des Sensorkopfes eine axiale Nut aufweist, mit der eine Feder eines den Sensorkopf umgebenden Sensorgehäuses in Eingriff steht und eine Verdrehsicherung durch eine Modifikation der Zylinderform des Sensorkopfes bildet. Das den Sensorkopf umgebende Sensorgehäuse ist darüber hinaus mit einem seitlich herausragenden Arm verbunden, der an die Halterung angeschraubt ist und somit eine radiale Fixierung des Sensorgehäuses gewährleistet.

Eine derartige Vorrichtung zur Selbstjustage eines Impulsdrehzahlgebers erfordert nachteilig zusätzlich zu dem veränderten aktiven Sensorkopf mit axial ausgerichteter Nut-Feder-Konstruktion, um eine Verdrehsicherung herzustellen, ein weiteres komplexes und kostenintensives Sensorgehäuse, in dem der Sensorkopf axial verschoben werden kann ohne die radiale Ausrichtung zu verändern.

Aus der Druckschrift US 4,612,501 ist eine Vorrichtung zur Selbstjustage eines Impulsdrehzahlgebers bekannt, bei dem als Verdrehsicherung ein Klemmring eingesetzt wird, der formschlüssig durch entsprechende Aussparungen, die in den zylindrischen Sensorkopf einzubringen sind, ein Verdrehen zwischen Klemmring und Sensorkopf gewährleistet. Jedoch hat diese Vorrichtung den Nachteil, dass sich der Klemmring mit seinen Klemmzähnen in der glatten Bohrungswand der Halterung und damit auch der Sensor in der Bohrung verdrehen kann. Damit ist eine zuverlässige radiale Ausrichtung eines orientierungsabhängigen Sensors nicht gegeben, da hier eine Verdrehsicherung zwischen Halterung und Klemmring nicht vorgesehen ist. Auch diese Vorrichtung hat den Nachteil, dass der zylindrische Sensorkopf in seinem Profil zu ändern ist, um zumindest eine Verdrehung des Sensorkopfes gegenüber dem Klemmring zu gewährleisten.

Aufgabe der Erfindung ist es, eine Vorrichtung zur Selbstjustage eines Impulsdrehzahlgebers in Bezug auf einen Rotor zu schaffen, die kostengünstig herzustellen ist und die zylindrische Form des Sensorkopfes kostengünstig beibehält. Ferner ist es Aufgabe, eine Vorrichtung anzugeben, die kein aufwendiges aus dem Stand der Technik bekanntes Gehäuse für den zylindrischen Sensorkopf erfordert, um den Sensorkopf orientiert und dennoch axial verschieblich mit einer Halterung mechanisch zu verbinden.

Diese Aufgabe wird mit dem Gegenstand von Anspruch 1 gelöst. Vorteilhafte Weiterbildungen der Erfindung ergeben sich aus den abhängigen Ansprüchen.

Erfindungsgemäß wird eine Vorrichtung zur Selbstjustage eines Impulsdrehzahlgebers in Bezug auf einen Rotor geschaffen. Dabei weist die Vorrichtung einen Impulsdrehzahlgeber mit einem zylindrischen Sensorkopf und einem Adapter zu einem Mess- und Versorgungskabel auf. Eine elastische Klemmhülse, die den zylindrischen Sensorkopf radial umfasst, ist kraftschlüssig in einer Bohrung einer Halterung angeordnet, wobei die Klemmhülse einen Presssitz des Sensorkopfes in der Bohrung bildet. Der Presssitz ermöglicht eine Drehung und eine axiale Verschiebung zwischen Halterung und Sensorkopf.

Der Impulsdrehzahlgeber hat einen aktiven orientierungsabhängigen zylindrischen Sensorkopf und die Klemmhülse oder der Impulsdrehzahlmesser weisen eine Verdrehsicherung in Bezug auf die Halterung auf. Die Verdrehsicherung ermöglicht eine axiale Verschiebung des Sensorkopfes in der Klemmhülse gegenüber dem Rotor zur Selbstjustage des Sensorkopfes unter Beibehaltung der radialen Ausrichtung bzw. Orientierung des Sensorkopfes gegenüber dem Rotor.

Diese Vorrichtung hat den Vorteil, dass im Gegensatz zum Stand der Technik keine Veränderung der Zylinderform des aktiven orientierungsabhängigen Sensorkopfes erforderlich ist. Außerdem hat die Erfindung den Vorteil, dass lediglich der Adapter aus Kunststoff und/oder die Klemmhülse zu modifizieren sind, um eine wirksame kostengünstige Verdrehsicherung bei gleichzeitiger Aufrechterhaltung einer axialen Verschiebung des Sensorkopfes in der Klemmhülse gegenüber dem Rotor zu ermöglichen, so dass eine Selbstjustage des Sensorkopfes gegenüber dem Rotor mit dieser Vorrichtung möglich wird.

Gemäß der Erfindung weist die Klemmhülse als Verdrehsicherung zwei Laschen auf, wobei eine erste Lasche mit dem Adapter des Impulsdrehzahlgebers und eine zweite Lasche mit der Halterung in Eingriff stehen. Da die Klemmhülse aus einem federelastischen Blech oder aus einer federelastischen Metallplatte gestanzt ist, bedeutet es keinen zusätzlichen kostenintensiven Aufwand, bei diesem Stanzen zwei zusätzliche Laschen an den Rändern der abgewickelten Klemmhülse auszustanzen und beim Zusammenbau von Halterung und Impulsdrehzahlgeber eine erste Lasche mit dem Adapter des Impulsdrehzahlgebers in Eingriff zu bringen und eine zweite Lasche an der Halterung zu fixieren. Dabei wird lediglich sichergestellt, dass eine Aussparung in dem Adapter eine axiale Verschiebung des Adapters gegenüber der ersten Lasche ermöglicht.

Um eine Verdrehsicherung mit Hilfe der Klemmhülse zu bilden, sind unterschiedliche Anordnungen der ersten und der zweiten Lasche möglich. In einer Ausführungsform der Erfindung sind die erste und die zweite Lasche der Klemmhülse an einem einzigen Rand der Klemmhülse angeordnet. In einer weiteren Ausführungsform der Erfindung ist es vorgesehen, die erste und die zweite Lasche der Klemmhülse an einander gegenüberliegenden Rändern der Klemmhülse anzuordnen. Schließlich ist es auch möglich, die erste und die zweite Lasche der Klemmhülse an Rändern der Klemmhülse anzuordnen, die in einem Winkel zueinander stehen. Diese drei Modifikationen haben unterschiedliche Vorteile, die im Einzelnen anhand der nachfolgenden Figuren näher erläutert werden.

Weiterhin erfindungsgemäß ist die zweite Lasche der Klemmhülse in einer passenden Aussparung der Halterung fixiert und die erste Lasche der Klemmhülse ragt in eine passende Aussparung des Adapters hinein. Damit wird in vorteilhafter Weise eine Verdrehsicherung der Klemmhülse gegenüber der Halterung durch die Fixierung der zweiten Lasche gewährleistet, während die erste Lasche einerseits gegenüber dem Adapter und damit dem Impulsdrehzahlgeber eine Verdrehsicherung darstellt und andererseits durch die Tiefe der Aussparung in dem Adapter für die erste Lasche eine axiale Verschieblichkeit des Adapters gegenüber der Klemmhülse und damit auch gegenüber der Halterung und schließlich auch gegenüber dem Rotor möglich ist. Weiterhin ist der Adapter mit der Aussparung gegenüber der ersten Lasche axial verschieblich.

• Zunächst wird ein Impulsdrehzahlgeber mit einem aktiven orientierungsabhängigen zylindrischen Sensorkopf und einem Adapter zu einem Mess- und Versorgungskabel hergestellt. Ferner wird eine Klemmhülse in eine Bohrung einer Halterung unter Anbringen einer ersten Verdrehsicherung der Klemmhülse gegenüber der Halterung eingebracht. Anschließend kann der zylindrische Sensorkopf in die Klemmhülse unter Einbringen einer zweiten Verdrehsicherung der Klemmhülse gegenüber dem Impulsdrehzahlgeber und unter Aufrechterhalten eines axial beweglichen Presssitzes des zylindrischen Sensorkopfes in der Klemmhülse in Richtung auf den Rotor eingebracht werden.

Anschließend wird eine axiale Verschiebung des Sensorkopfes in der Klemmhülse, bis der Sensorkopf den stehenden Rotor berührt, vorgenommen. Danach erfolgt die Selbstjustage des Sensorkopfes auf einen minimalen Messabstand zu dem Rotor durch Drehen des Rotors unter axialer anpassender Verschiebung des Presssitzes des Sensorkopfes in der Klemmhülse.

Ferner stellt die mit der erfindungsgemäßen Vorrichtung kostengünstig realisierbare Selbstjustage sicher, dass ein minimaler Messabstand zwischen den Polen des Polrades bzw. Rotors und dem Sensorkopf automatisch eingestellt wird, sobald sich der Rotor dreht. Weiterhin ist es von Vorteil, dass keine zusätzlichen Prozessschritte erforderlich werden, so kann nach wie vor die abgerollte oder abgewickelte Klemmhülse aus einem federelastischen Stahlblech gestanzt werden.

Außerdem kann nach wie vor mit einem einzigen Spritzgussschritt der Adapter an den aktiven orientierungsabhängigen und zylindrischen Sensorkopf angeformt werden. Es ist lediglich eine axiale, parallel zum Zylinderkopf angeordnete Aussparung in dem Adapter vorzusehen, die mit einer ersten Lasche der Klemmhülse beim Zusammenbau der Vorrichtung in Eingriff gebracht wird. Auch die Verdrehsicherung der Klemmhülse gegenüber der Halterung kann durch Einbringen einer entsprechend angepassten Aussparung in die Halterung realisiert werden, wobei schließlich die zweite Lasche der Klemmhülse in dieser Aussparung formschlüssig fixiert wird.

• Die Erfindung wird nun anhand der beigefügten Figuren näher erläutert.
- Figur 1: zeigt eine schematische Ansicht eines aktiven Impulsdrehzahlgebers mit Kopplungselement für eine Verdrehsicherung;
- Figur 2: zeigt eine schematische Draufsicht auf eine abgewickelte Klemmhülse;
- Figur 3: zeigt einen schematischen Querschnitt durch eine Vorrichtung gemäß einer ersten, nicht erfindungsgemäßen Ausführungsform ;
- Figur 4: zeigt einen schematischen Querschnitt durch die Vorrichtung gemäß Figur 3 entlang der Schnittlinie A-A;
- Figur 5: zeigt eine schematische Ansicht eines aktiven Impulsdrehzahlgebers mit modifiziertem Kopplungselement für eine Verdrehsicherung;
- Figur 6: zeigt einen schematischen Querschnitt durch eine Vorrichtung mit modifiziertem Kopplungselement;
- Figur 7: zeigt eine schematische Ansicht eines weiteren aktiven Impulsdrehzahlgebers mit mehreren Kopplungselementen;
- Figur 8: zeigt einen schematischen Querschnitt einer Vorrichtung gemäß einer zweiten, nicht erfindungsgemäßen Ausführungsform ;
- Figur 9: zeigt einen schematischen Querschnitt durch die Vorrichtung gemäß Figur 8 entlang der Schnittlinie A-A;
- Figur 10: zeigt eine schematische Ansicht eines weiteren aktiven Impulsdrehzahlgebers mit modifizierter Anordnung der Kopplungselemente;
- Figur 11: zeigt einen schematischen Querschnitt einer Vorrichtung gemäß einer modifizierten zweiten, nicht erfindungsgemäßen Ausführungsform;
- Figur 12: zeigt einen schematischen Querschnitt durch die Vorrichtung gemäß Figur 10 entlang der Schnittlinie A-A;
- Figur 13: zeigt einen schematischen Querschnitt durch eine Vorrichtung gemäß einer dritten, nicht erfindungsgemäßen Ausführungsform ;
- Figur 14: zeigt einen schematischen Querschnitt durch eine Vorrichtung gemäß einer Modifikation der dritten, nicht erfindungsgemäßen Ausführungsform;
- Figur 15: zeigt einen schematischen Querschnitt durch eine Vorrichtung gemäß einer vierten, erfindungsgemäßen Ausführungsform;
- Figur 16: zeigt eine schematische Draufsicht auf eine abgewickelte Klemmhülse der Vorrichtung gemäß Figur 15;
- Figur 17: zeigt einen schematischen Querschnitt der Vorrichtung gemäß Figur 15 entlang der Schnittlinie A-A;
- Figur 18: zeigt einen schematischen Querschnitt durch eine Vorrichtung gemäß einer Modifikation der vierten, erfindungsgemäßen Ausführungsform;
- Figur 19: zeigt eine schematische Draufsicht auf eine abgewickelte Klemmhülse der Vorrichtung gemäß Figur 18;
- Figur 20: zeigt einen schematischen Querschnitt durch eine Vorrichtung gemäß einer fünften, erfindungsgemäßen Ausführungsform;
- Figur 21: zeigt eine schematische Draufsicht auf eine abgewickelte Klemmhülse der Vorrichtung gemäß Figur 20;
- Figur 22: zeigt eine schematische Ansicht eines weiteren aktiven Impulsdrehzahlgebers mit modifiziertem Adapter für eine sechste, erfindungsgemäße Ausführungsform;
- Figur 23: zeigt einen schematischen Querschnitt durch eine Vorrichtung gemäß der sechsten, erfindungsgemäßen Ausführungsform;
- Figur 24: zeigt eine schematische Draufsicht auf eine abgewickelte Klemmhülse der Vorrichtung gemäß Figur 23.

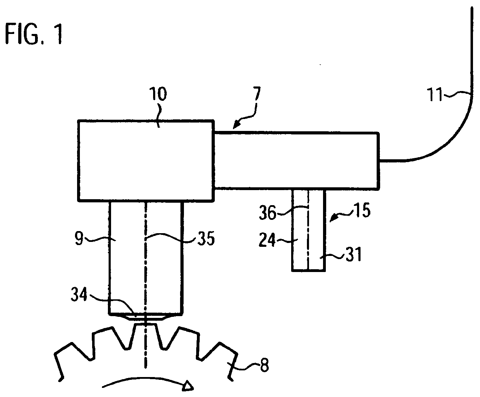

Figur 1 zeigt eine schematische Ansicht eines aktiven Impulsdrehzahlgebers 7 mit Kopplungselement 31 für eine Verdrehsicherung 15. Dieser Impulsdrehzahlgeber 7 weist einen aktiven orientierungsabhängigen zylindrischen Sensorkopf 9 und einen Adapter 10 zu einem Mess- und Versorgungskabel 11 auf. Dieses Mess- und Versorgungskabel 11 liefert eine Versorgungsspannung für ein Hall-Sensorplättchen in der Messspitze 34 des Sensorkopfes 9 und weitere Messkabel zur Weiterleitung der Messsignale des Hall-Sensorplättchens.

Die Sensorspitze 34 eines derartigen Sensorkopfes 9 liefert dann maximale Sensorsignale, wenn die Sensorspitze 34 gegenüber einem als Rotor 8 ausgebildeten Polrad orientierungstreu, d.h. radial zur Achse 35 des Sensorkopfes 9 ausgerichtet und fixiert ist. Für diese Ausrichtung und Fixierung ist an den Adapter 10 das Kopplungselement 31 angeformt, das in dieser Ausführungsform als ein Orientierungsstift 24 beim Spritzgießen des Adapters 10 an diesen angeformt ist, wobei die Achse 36 des Orientierungsstiftes parallel zur Achse 35 des Sensorkopfes 9 ausgerichtet ist.

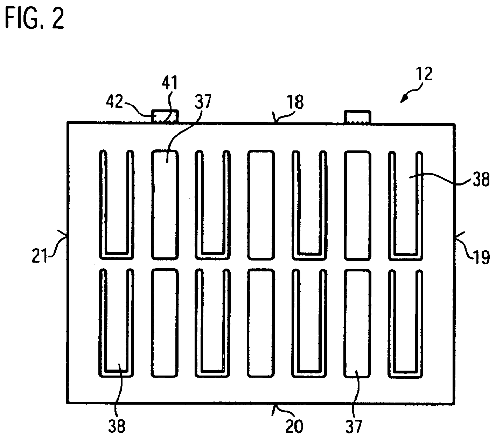

Figur 2 zeigt eine schematische Draufsicht auf eine abgewickelte Klemmhülse 12 zur Fixierung des in Figur 1 gezeigten Impulsdrehzahlgebers in einer Bohrung einer Halterung. In dieser Ausführungsform weist die abgewickelte Klemmhülse 12, die aus einer federelastischen Blechplatte gestanzt werden kann, Plattenränder 18, 19, 20 und 21 auf. Bei dem Ausstanzen werden gleichzeitig Aussparungen zur Variation des Anpressdruckes der Klemmhülse 12 an eine Bohrung in einer Halterung berücksichtigt. Ferner werden mit dem Ausstanzen elastisch federnde Klemmlaschen 38 ausgestanzt, die einen Presssitz für ein in die Bohrung einzuführendes zylindrisches Element sicherstellen.

Darüber hinaus sind auf dem Rand 18 zwei axiale Sicherungslaschen 42 und 43 vorgeformt, die vor dem Einsetzen der Klemmhülse 12 in die Bohrung einer Halterung für den Sensorkopf derart entlang der punktierten Linie 41 abgewinkelt werden, dass die Klemmhülse 12 beim Einsetzen des Sensorkopfes in die Bohrung der Halterung nicht axial verrutscht, in dem sich die abgekanteten axialen Sicherungslaschen 42 und 43 an der Halterung abstützen.

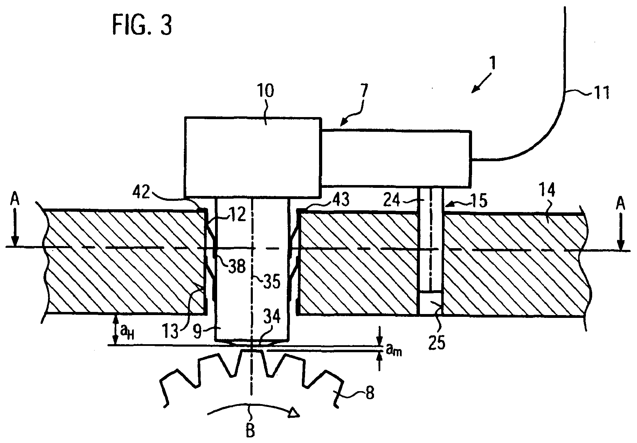

Figur 3 zeigt einen schematischen Querschnitt durch eine Vorrichtung 1 gemäß einer ersten, nicht erfindungsgemäßen Ausführungsform.

Diese Vorrichtung 1 weist eine Halterung 14 und ein Polrad als Rotor 8 auf, wobei der Rotor 8 und die Halterung 14 in einem Abstand a_{H} voneinander angeordnet sind. In eine Bohrung 13 der Halterung 14 ist die in Figur 2 gezeigte federelastische Klemmhülse 12 eingebracht und stützt sich gegenüber der Wandung der Bohrung 13 ab und bildet einen Presssitz für den in die Klemmhülse eingeführten Sensorkopf 9 mit Hilfe der in Figur 2 gezeigten Klemmlaschen 38.

Eine derartige einen Presssitz für den Sensorkopf 9 bildende elastische Klemmhülse 12 ermöglicht es, den Sensorkopf 9 axial zu verschieben und radial zu verdrehen. Um eine Orientierung bzw. radiale Ausrichtung des aktiven orientierungsabhängigen zylindrischen Sensorkopfes 9 zu sichern und dennoch eine axiale Verschiebung des Sensorkopfes 9 in dem Presssitz gegenüber der Halterung 14 zuzulassen, ist in dieser Ausführungsform an den Adapter 10 ein Orientierungsstift 24 als Verdrehsicherung 15 angeformt, der beim Einschieben des Sensorkopfes 9 in die Bohrung 13 in eine entsprechende parallel zu der Bohrung 13 ausgerichtete Orientierungsbohrung 25 der Halterung 14 eingeführt ist.

Somit ist es möglich, die Messspitze 34 im Stillstand des Rotors 8 auf den Rotor 8 aufzusetzen und beim Drehen des Rotors 8 in Pfeilrichtung B eine Selbstjustage der Sensorspitze 34 bzw. des Impulsdrehzahlgebers 7 zu gewährleisten. Da für diese Ausführungsform lediglich eine zylindrische Hülse für den Impulsdrehzahlgeber 7 bereitzustellen ist, kann auf ein komplexes Gehäuse zur Gewährleistung einer axialen Verschiebung des Sensorkopfes 9 in der Halterung 14 verzichtet werden, wodurch eine erhebliche Raumersparnis und Kostenersparnis möglich ist. Dieser Sensorkopf 9 benötigt folglich einen minimalen Raum und kann in eine entsprechend angepasste Bohrung 13 mit minimalem Durchmesser eingesetzt werden, wobei eine Orientierungsbohrung 25 den Orientierungsstift 24 als Verdrehsicherung 15 führt.

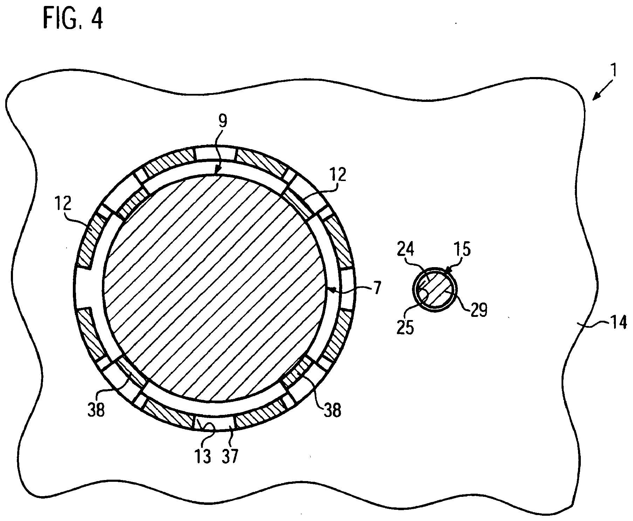

Figur 4 zeigt einen schematischen Querschnitt durch die Vorrichtung 1 gemäß Figur 3 entlang der Schnittlinie A-A. Mit dieser Schnittzeichnung wird deutlich, dass in die Halterung 14 lediglich zwei Bohrungen 13 und 25 einzubringen sind, um einerseits den Sensorkopf 9 radial auszurichten und mit Hilfe des Orientierungsstiftes 24 gegen Verdrehung zu sichern. Dabei kann der zylindrische Sensorkopf 9 unverändert beibehalten werden und braucht weder eine Nut noch zusätzliche Aussparungen, in die im Stand der Technik formschlüssige Elemente der Halterung oder eines Klemmringes eingreifen, vielmehr bilden die Klemmlaschen 38 einen Presssitz für den Sensorkopf 9.

Drehmomente, die auf den Impulsdrehzahlgeber 7 in Bezug auf die Halterung 14 wirken, werden durch den Orientierungsstift 24 kompensiert, wobei die Querschnittsfläche 29 des Orientierungsstiftes ein entsprechend hohes Flächenträgheitsmoment aufweisen muss, um derartigen Drehmomenten zu widerstehen und andererseits auch entsprechend auftretende Scherspannungen zu kompensieren. Wenn ein einzelner Orientierungsstift 24 nicht ausreicht, so können an den Adapter 10 Orientierungsstifte mit vergrößertem Querschnitt und geänderter Kontur oder auch eine Mehrzahl von Orientierungsstiften angeformt werden.

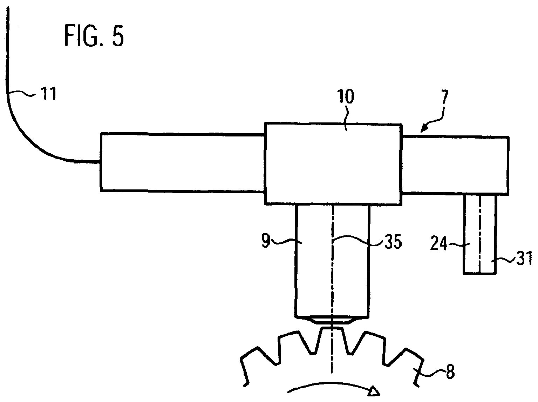

Figur 5 zeigt eine schematische Ansicht eines aktiven Impulsdrehzahlgebers 7 mit modifiziertem Kopplungselement 31 für eine Verdrehsicherung. Komponenten mit den gleichen Funktionen wie in den vorhergehenden Figuren werden mit den gleichen Bezugszeichen gekennzeichnet und nicht extra erörtert. Das Kopplungselement 31 ist dahingehend modifiziert, dass an den Adapter eine Verlängerung 44 angeformt ist, die den Orientierungsstift 24 aufweist, der parallel zu einer Bohrung in der Halterung angeordnet ist und nicht aus dem Übergang des Adapters zu dem Mess- und Versorgungskabel 11 herausragt, sondern aus der Verlängerung 44.

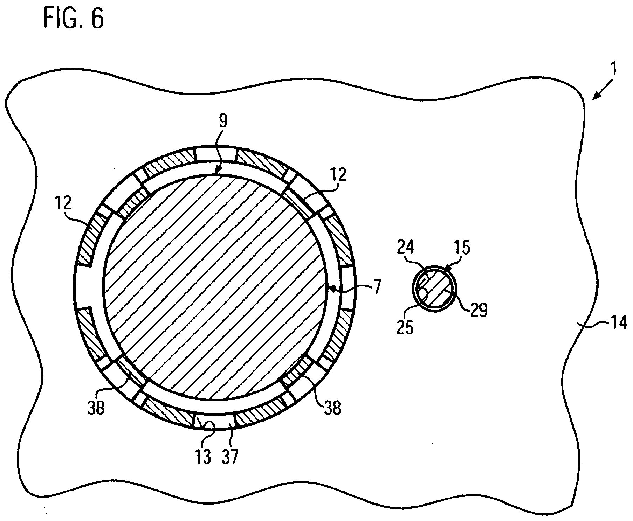

Figur 6 zeigt einen schematischen Querschnitt durch eine Vorrichtung mit modifiziertem Kopplungselement 31. Dieser Querschnitt zeigt, dass in die Halterung 14 lediglich zwei Bohrungen 13 und 25 einzubringen sind, um einerseits den Sensorkopf 9 radial auszurichten und mit Hilfe des Orientierungsstiftes 24 gegen Verdrehung zu sichern. Dabei kann der zylindrische Sensorkopf 9 unverändert beibehalten werden und braucht weder eine Nut noch zusätzliche Aussparungen, in die im Stand der Technik formschlüssige Elemente der Halterung oder eines Klemmringes eingreifen, vielmehr bilden die Klemmlaschen 38 einen Presssitz für den Sensorkopf 9.

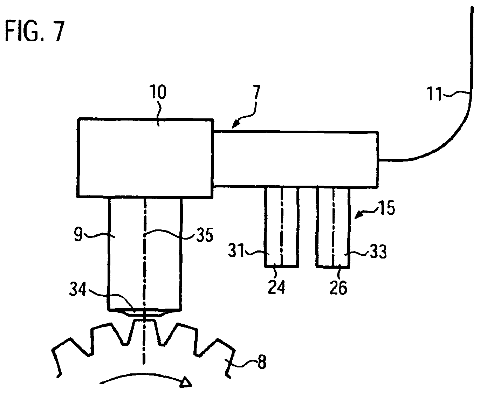

Figur 7 zeigt eine schematische Ansicht eines weiteren aktiven Impulsdrehzahlgebers 7 mit mehreren Kopplungselementen 31 und 33 für eine Verdrehsicherung 15. Durch den Abstand des parallel zur Achse 35 des Sensorkopfes 9 angeordneten Orientierungsstiftes 26 kann ein erhöhtes Drehmoment, das auf den Sensorkopf 9 wirkt, kompensiert werden. Ferner ist durch diesen zweiten Orientierungsstift 26 auch der gesamte Querschnitt und damit das Flächenträgheitsmoment der Verdrehsicherung 15 deutlich vergrößert.

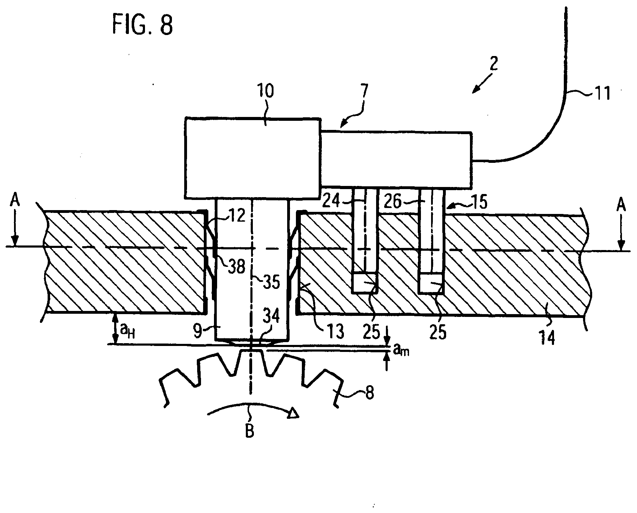

Figur 8 zeigt einen schematischen Querschnitt durch eine Vorrichtung 2 gemäß einer zweiten, nicht erfindungsgemäßen Ausführungsform . Komponenten mit gleichen Funktionen wie in den vorhergehenden Figuren werden mit gleichen Bezugszeichen gekennzeichnet und nicht extra erörtert. Für den hier gezeigten zweiten Orientierungsstift 26 ist eine zweite Orientierungsbohrung 27 in der Halterung 14 erforderlich, die achsparallel zu der Bohrung 13 eingebracht wird, so dass eine axiale Verschiebung des Sensorkopfes 9 bei gleichzeitiger Beibehaltung der radialen Ausrichtung und damit Orientierung des Sensorkopfes 9 möglich ist. Anstelle der in der ersten Ausführungsform gezeigten Durchgangsbohrungen für die Orientierungsbohrungen 25 und 27 sind in dieser Ausführungsform Blindbohrungen als Orientierungsbohrungen 25 und 27 vorgesehen.

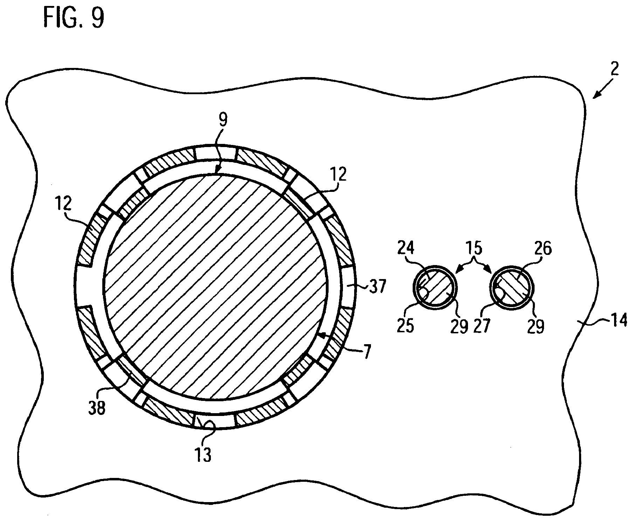

Figur 9 zeigt einen schematischen Querschnitt durch die Vorrichtung 2 gemäß Figur 8 entlang der Schnittlinie A-A, wobei zusätzlich zu der in Figur 4 gezeigten Orientierungsbohrung 25 nun eine im größeren Abstand zum Sensorkopf 9 angebrachte weitere Orientierungsbohrung in die Halterung 14 eingelassen ist, in welcher ein zweiter Orientierungsstift 26 als Verdrehsicherung 15 beim Einführen des Sensorkopfes 9 in die Klemmhülse 12 eingebracht werden kann. Beide Orientierungsstifte 24 und 26 sind an den Adapter 10 aus Kunststoff angespritzt, so dass ihr Widerstand gegen Scherspannungen begrenzt ist. Um den Widerstand gegenüber Scherspannungen weiter zu erhöhen, ist es möglich, in einer weiteren Ausführungsform einen Orientierungsstift aus Metall vorzusehen.

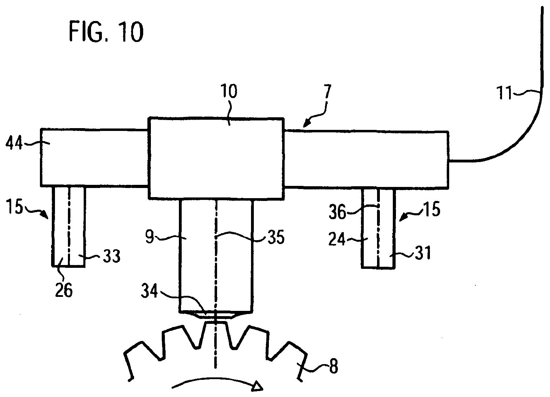

Figur 10 zeigt eine schematische Ansicht eines weiteren aktiven Impulsdrehzahlgebers mit modifizierter Anordnung der Kopplungselemente. Dabei ist das zweite Kopplungselement 33 als Orientierungsstift 24 an einer Verlängerung 44 des Adapters 10 angeordnet. Die Verlängerung 44 und der zweite Orientierungsstift sind an den Adapter gegenüberliegend zu dem Übergang auf das Mess- und Versorgungskabel 11 angeordnet.

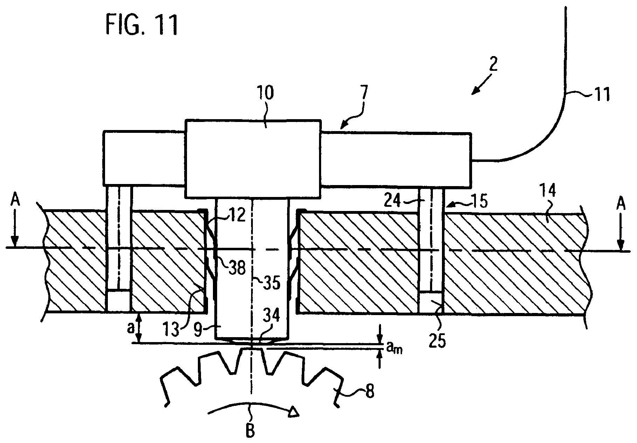

Figur 11 zeigt einen schematischen Querschnitt einer Vorrichtung gemäß einer modifizierten zweiten, nicht erfindungsgemäßen Ausführungsform, dazu ist entsprechend der modifizierter Anordnung der Kopplungselemente bzw. der Orientierungsstifte nun auch die Anordnung der Orientierungsbohrungen in der Halterung geändert.

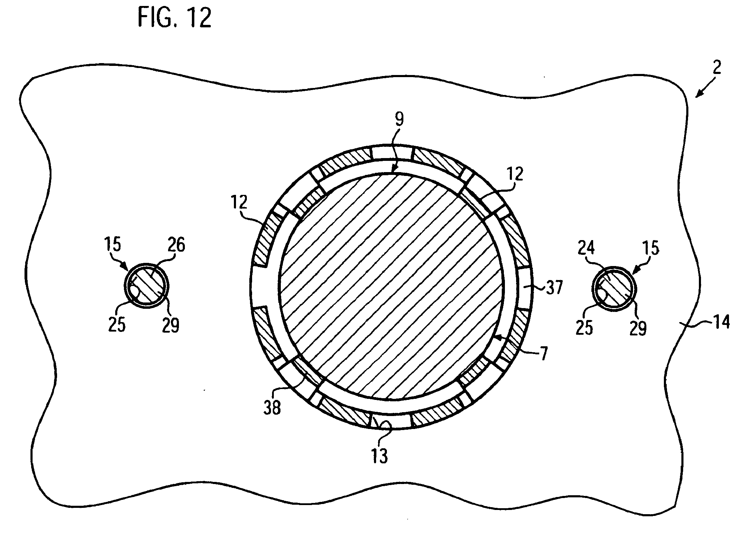

Figur 12 zeigt einen schematischen Querschnitt durch die Vorrichtung gemäß Figur 10 entlang der Schnittlinie A-A. Mit dieser Darstellung wird verdeutlicht, dass die Orientierungsbohrungen 25 und 27 nun beidseitig der Aufnahmebohrung für den Sensorkopf angeordnet sind, um die Orientierungsstifte 24 und 26 beim Einbringen des Sensorkopfes 9 aufzunehmen und eine höheres Drehmoment zu übertragen.

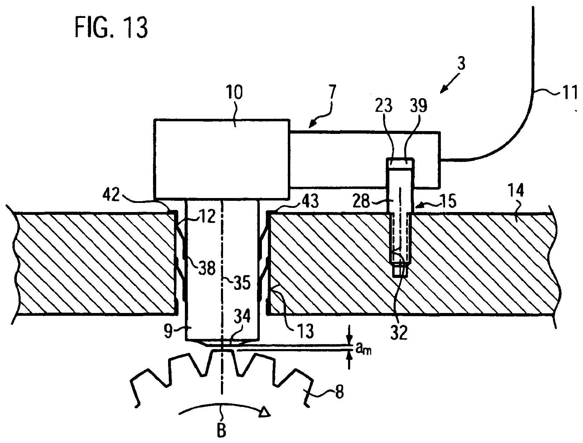

Figur 13 zeigt einen schematischen Querschnitt durch eine Vorrichtung 3 gemäß einer dritten, nicht erfindungsgemäßen Ausführungsform . Diese Ausführungsform unterscheidet sich von den vorhergehenden Ausführungsformen dadurch, dass in dem Adapter 10 eine Aussparung eingebracht ist, welche die Form einer Orientierungsbohrung 39 aufweist. Ein metallischer Orientierungsstift 28 ist als Verdrehsicherung 15 in der Halterung 14 fixiert. Diese Fixierung kann durch einen Presssitz eines Passstiftes erfolgen und/oder durch eine hier gezeigte Gewindebohrung 32 oder stoffschlüssig gesichert werden. Durch einen einfachen metallischen Orientierungsstift 28 kann somit der Aufwand entfallen, ein zusätzliches komplexes Sensorgehäuse mit der Halterung 14 zu verschrauben, um innerhalb des Sensorgehäuses eine formschlüssige axiale Führung für den Sensorkopf 9 vorzusehen.

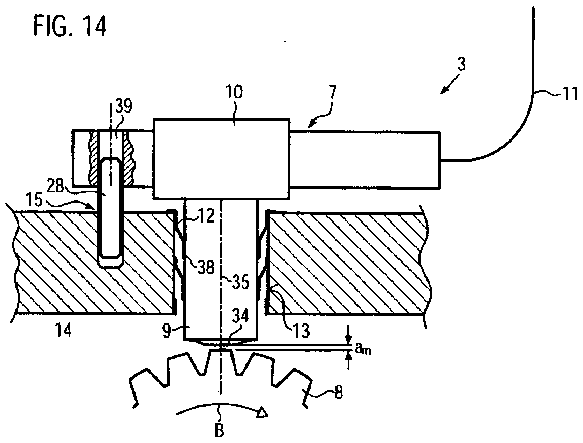

Figur 14 zeigt einen schematischen Querschnitt durch eine Vorrichtung 3 gemäß einer Modifikation der dritten, nicht erfindungsgemäßen Ausführungsform . Während in Figur 13 die Orientierungsbohrung 39 in den Übergangsbereich des Adapters zu dem Mess- und Versorgungskabel 11 eingeformt ist, und deshalb lediglich als eine Blindbohrung ausgeführt ist, kann in eine gegenüberliegende Verlängerung 44 des Adapters auch eine, wie hier gezeigt Durchgangsbohrung als Orientierungsbohrung 39 realisiert werden. Außerdem ist der Orientierungsstift 28 als einfacher Passstift in eine Bohrung der Halterung 14 eingepresst, so dass sich das Schneiden eines Gewindes erübrigt.

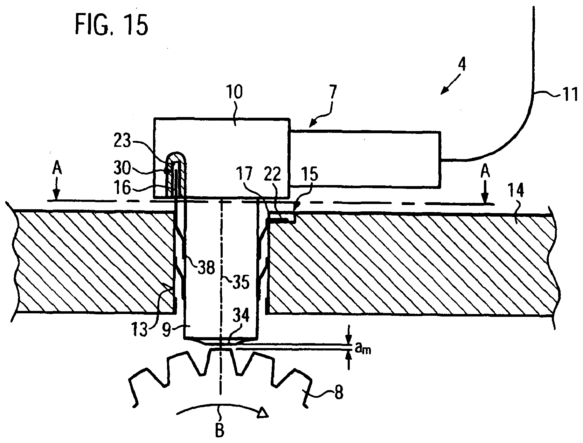

Figur 15 zeigt einen schematischen Querschnitt durch eine Vorrichtung 4 gemäß einer vierten, erfindungsgemäßen Ausführungsform. Bei dieser Ausführungsform der Erfindung sind an einem Rand der Klemmhülse 12 Laschen 16 und 17 vorgesehen, wobei die Lasche 16 in eine entsprechende Aussparung 23 des Adapters 10 des Impulsdrehzahlgebers 7 hineinragt und damit eine weitere Verdrehsicherung 30 bildet, während die Lasche 17 in einer entsprechenden Aussparung 22 der Halterung 14 fixiert ist und damit eine Verdrehsicherung 15 gegenüber der Halterung 14 sichert.

Mit dieser kostengünstigen Umgestaltung der Klemmhülse 12 kann einerseits sichergestellt werden, dass die radiale Ausrichtung des Sensorkopfes 9 gegenüber dem Rotor 8 eingehalten wird und andererseits für eine Selbstjustage des Sensorkopfes 9 gegenüber dem Rotor 8 durch eine axiale Verschieblichkeit des Impulsdrehzahlgebers 7 gegenüber dem Rotor 8 auf einen minimalen Messabstand aₘ sichergestellt wird. Dazu ist die Aussparung 23 in den Adapter tiefer eingebracht als der in die Aussparung 23 hineinragende Abschnitt der Lasche 16.

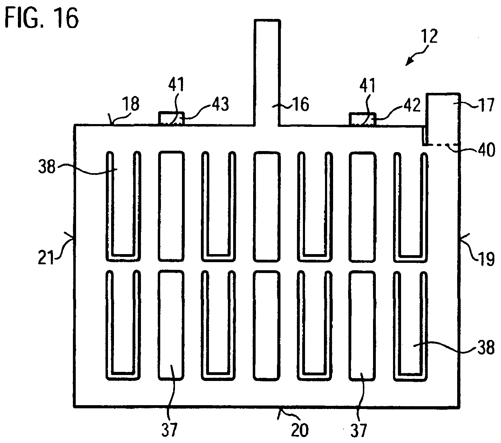

Figur 16 zeigt eine schematische Draufsicht auf eine abgewickelte Klemmhülse 12 der Vorrichtung 4 gemäß Figur 9. Diese Klemmhülse 12 kann wie bisher aus einer federelastischen Metallplatte gestanzt werden, wobei an einem einzigen Rand 18 neben den axialen Sicherungslaschen 43 und 44 die beiden Laschen 16 und 17 für die Verdrehsicherung vorgesehen werden. Die Lasche 17 wird lediglich vor dem Einbringen der Klemmhülse 12 in die in Figur 9 gezeigte Aussparung 22 entsprechend der in Figur 10 gezeigten punktierten Linie 40 abgewinkelt oder abgekantet. Diese Abkantung ist unterhalb des Randes 18 vorgesehen, um die Lasche 17 in einer entsprechenden Aussparung der Halterung radial zu fixieren.

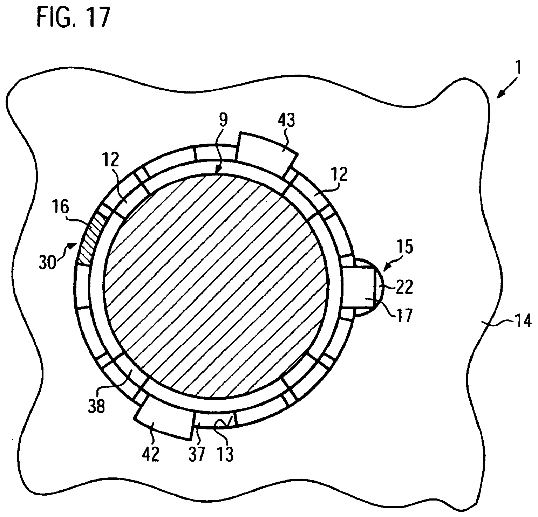

Figur 17 zeigt einen schematischen Querschnitt der Vorrichtung 4 gemäß Figur 15 entlang der Schnittlinie A-A. Diese Figur 17 zeigt die abgewinkelte Lasche 17, welche in eine Aussparung 22 der Halterung 14 hineinragt und als Verdrehsicherung 15 gegenüber der Halterung 14 dient, während eine weitere Lasche 16, die hier im Querschnitt zu sehen ist, in den Adapter 10, wie es Figur 9 zeigt, hineinragt und eine zweite Verdrehsicherung 30 der Klemmhülse 12 gegenüber dem Adapter sicherstellt. Außerdem sind die axialen Sicherheitslaschen 42 und 43 zu sehen.

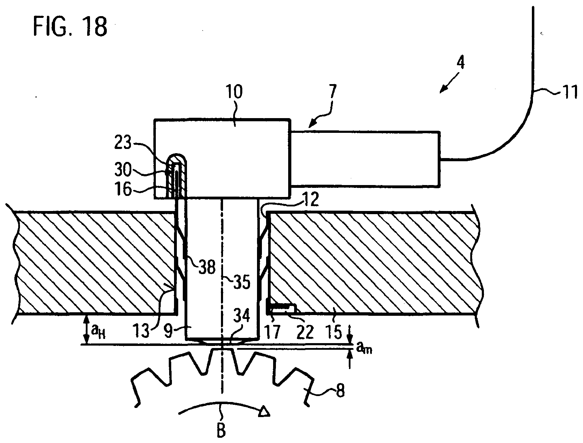

Figur 18 zeigt einen schematischen Querschnitt durch eine modifizierte Vorrichtung 4 gemäß der vierten, erfindungsgemäßen Ausführungsform. Der Unterschied zu der in Figur 15 gezeigten Ausführungsform der Erfindung liegt darin, dass die beiden Laschen 16 und 17 zur Verdrehsicherung der Klemmhülse 12 gegenüber der Halterung 14 und der Klemmhülse 12 gegenüber dem Adapter 10 auf zwei gegenüberliegenden Rändern der Klemmhülse 12 angeordnet sind, was mit der nächsten Figur gezeigt wird.

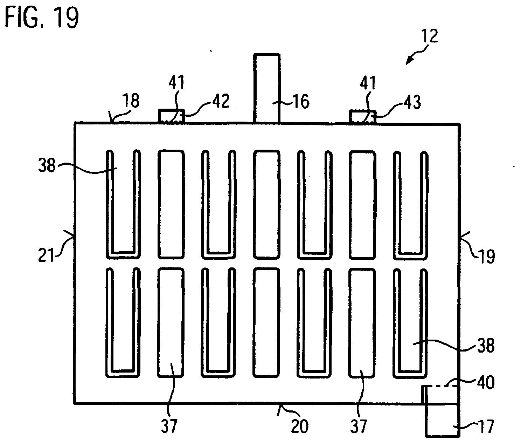

Figur 19 zeigt eine schematische Draufsicht auf eine abgewickelte Klemmhülse 12 der Vorrichtung 4 gemäß Figur 19. Komponenten mit gleichen Funktionen wie in Figur 16 werden mit gleichen Bezugszeichen gekennzeichnet und nicht extra erörtert. Die Lasche 16, die mit einer Aussparung in dem Adapter zusammenwirkt, ist auf dem Rand 18 der Klemmhülse 12 angeordnet und gegenüberliegend auf dem Rand 20 ist die Lasche 17 vorgesehen, die entlang der punktierten Linien 40 vor dem Einbringen in die Aussparung der Halterung abgekantet wird.

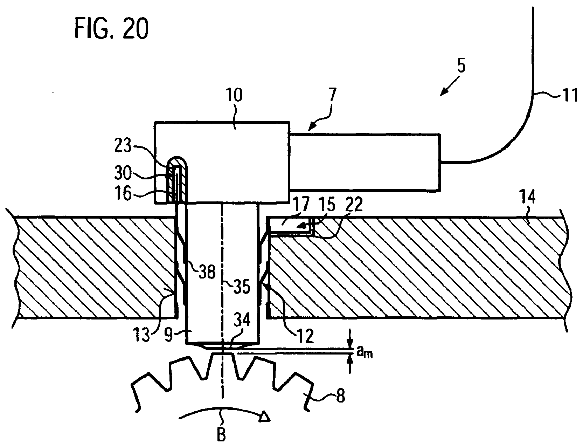

Figur 20 zeigt einen schematischen Querschnitt durch eine Vorrichtung 5 gemäß einer fünften, erfindungsgemäßen Ausführungsform. In dieser Ausführungsform der Erfindung sind wiederum Laschen 16 und 17 an der Klemmhülse 12 angeordnet, wobei in dieser Ausführungsform der Erfindung die Laschen auf zwei in einem Winkel zueinander stehenden Rändern der Klemmhülse ausgebildet sind. Die Aussparung 22 in der Halterung 14 ist entsprechend durch einen einfachen einsägbaren oder einfräsbaren Schlitz, der sich radial von der Bohrung 13 aus erstreckt, realisierbar. Dazu zeigt die nächste Figur die abgewickelte Klemmhülse.

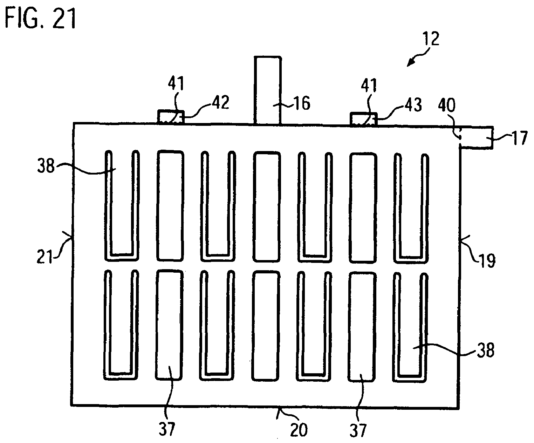

Figur 21 zeigt eine schematische Draufsicht auf eine abgewickelte Klemmhülse 12 der Vorrichtung gemäß Figur 20. In diesem Fall ist eine Abkantung der Lasche 17 entlang der gepunkteten Linie 40 erforderlich, um die Klemmhülse 12 für einen Einbau in die in Figur 20 gezeigten Bohrung 13 vorzubereiten. Komponenten mit gleichen Funktionen wie in den vorhergehenden Figuren 16 und 19 werden mit gleichen Bezugszeichen gekennzeichnet und nicht extra erörtert.

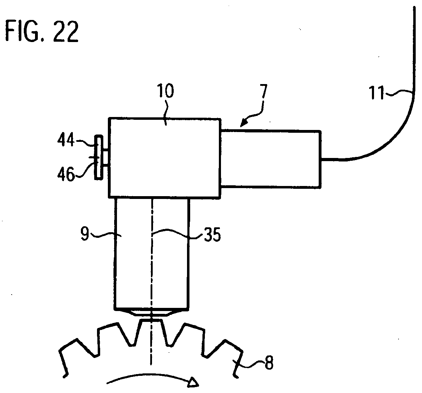

Figur 22 zeigt eine schematische Ansicht eines weiteren aktiven Impulsdrehzahlgebers 7 mit modifiziertem Adapter 10 für eine sechste, erfindungsgemäße Ausführungsform. In dieser Ausführungsform der Erfindung ist gegenüberliegend zu dem Mess- und Versorgungskabel an den Adapter 10 ein Haltestift 46 angeformt. Mit diesem Haltestift 46 kann eine gabelförmige Lasche wie sie die nächste Figur zeigt in Eingriff gebracht werden, um eine erste Verdrehsicherung zwischen Adapter und Klemmhülse zu bilden.

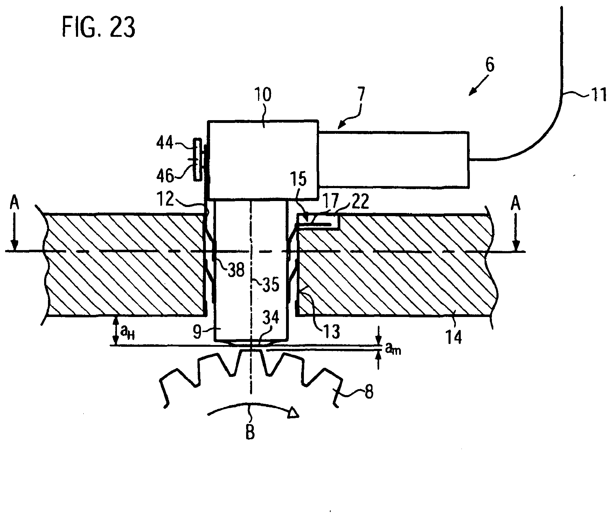

Figur 23 zeigt einen schematischen Querschnitt durch eine Vorrichtung 6 gemäß der sechsten, erfindungsgemäßen Ausführungsform. Beim Einführen der Klemmhülse in die Bohrung 13 der Halterung 14 wird zunächst eine abgekantete Lasche 17 der Klemmhülse 12 in eine Aussparung 22 der Halterung 14 als Verdrehsicherung 15 zwischen Klemmhülse 12 und Halterung 14 eingebracht. Beim anschließenden Einbringen des Sensorkopfes 9 in die Klemmhülse 12 und den des Sensorkopfes 9 in wird auch die Verdrehsicherung zwischen Sensorkopf 12 und Halterung 14 fertiggestellt, in dem die Gabelförmige Lasche 45 mit dem Halterstift 46 des Adapters 10 in Eingriff gebracht wird.

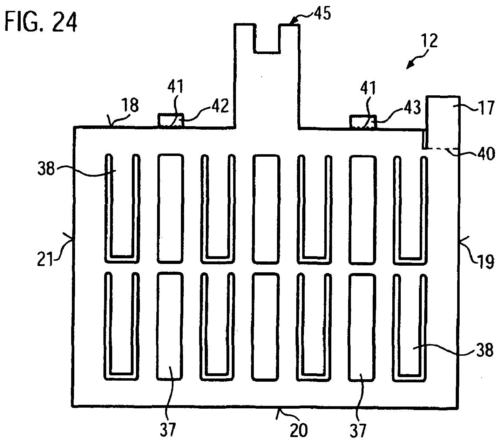

Figur 24 zeigt eine schematische Draufsicht auf eine abgewickelte Klemmhülse der Vorrichtung gemäß Figur 23 mit den zusätzlichen erfindungsgemäßen Laschen 45 und 17, wobei die Lasche 17 zunächst noch nicht abgekantet ist.

### Bezugszeichenliste

- 1: 1. nicht erfindungsgemäße Ausführungsform der Vorrichtung in 2 Modifikationen
- 2: 2. nicht erfindungsgemäße Ausführungsform der Vorrichtung in 2 Modifikationen
- 3: 3. nicht erfindungsgemäße Ausführungsform der Vorrichtung in 2 Modifikationen
- 4: 4. erfindungsgemäße Ausführungsform der Vorrichtung in 2 Modifikationen
- 5: 5. erfindungsgemäße Ausführungsform der Vorrichtung
- 6: 6. erfindungsgemäße Ausführungsform der Vorrichtung
- 7: aktiver Impulsdrehzahlgeber
- 8: Rotor
- 9: Sensorkopf
- 10: Adapter
- 11: Mess- und Versorgungskabel
- 12: elastische Klemmhülse
- 13: Bohrung
- 14: Halterung
- 15: Verdrehsicherung (zur Halterung)
- 16: 1. Lasche (zum Adapter)
- 17: 2. Lasche (zur Halterung)
- 18: Rand der Klemmhülse
- 19: Rand der Klemmhülse
- 20: Rand der Klemmhülse
- 21: Rand der Klemmhülse
- 22: Aussparung in der Halterung
- 23: Aussparung in dem Adapter
- 24: 1. Orientierungsstift (des Adapters)
- 25: Orientierungsbohrung (der Halterung)
- 26: 2. Orientierungsstift (des Adapters)
- 27: Orientierungsbohrung (der Halterung)
- 28: Orientierungsstift (der Halterung)
- 29: Querschnittsfläche (des Stiftes)
- 30: 2. Verdrehsicherung (zum Adapter)
- 31: Kopplungselement
- 32: Gewindebohrung
- 33: Kopplungselement
- 34: Messspitze
- 35: Achse des Sensorkopfes
- 36: Achse des Orientierungsstiftes
- 37: Aussparung
- 38: elastische Klemmlasche
- 39: Orientierungsbohrung (des Adapters)
- 40: punktierte Linie
- 41: punktierte Linie
- 42: axiale Sicherungslasche
- 43: axiale Sicherungslasche
- 44: Verlängerung des Adapters
- 45: gabelförmige Lasche
- 46: Haltestift
- a_{H}: Abstand zwischen Halterung und Rotor
- aₘ: Messabstand

## Patentansprüche

1. Vorrichtung zur Selbstjustage eines Impulsdrehzahlgebers (7) in Bezug auf einen Rotor (8) aufweisend:
- einen Impulsdrehzahlgeber (7) mit einem zylindrischen Sensorkopf (9) und einem Adapter zu einem Mess- und Versorgungskabel (11),
- eine elastische Klemmhülse (12), die den zylindrischen Sensorkopf (9) radial umfasst und sich kraftschlüssig in einer Bohrung (13) einer Halterung (14) abstützt, wobei die Klemmhülse (12) einen Presssitz des Sensorkopfes (9 ) in der Bohrung (13) bildet, und wobei der Presssitz eine Drehung und eine axiale Verschiebung zwischen Halterung (14) und Sensorkopf (9) zulässt, **dadurch gekennzeichnet, dass** der Impulsdrehzahlgeber (7) einen aktiven orientierungsabhängigen zylindrischen Sensorkopf (9) aufweist, und die Klemmhülse (12) eine Verdrehsicherung (15) in Bezug auf die Halterung (14) aufweist und die Verdrehsicherung (15) eine axiale Verschiebung des Sensorkopfes (9) in der Klemmhülse (12) gegenüber dem Rotor (8) zur Selbstjustage unter Beibehaltung der radialen Ausrichtung bzw. Orientierung des Sensorkopfes (9) gegenüber dem Rotor (8) zulässt, wobei die Klemmhülse (12) aus einer federelastischen Metallplatte oder aus einem federelastischen Blech gestanzt ist und als Verdrehsicherung (15, 30) zwei Laschen (16, 17) aufweist, wobei eine erste Lasche (16) mit dem Adapter (10) des Impulsdrehzahlgebers (7) und eine zweite Lasche (17) mit der Halterung (14) in Eingriff stehen, und wobei die zweite Lasche (17) der Klemmhülse (12) in einer passenden Aussparung (22) der Halterung (14) fixiert ist und die erste Lasche (16) der Klemmhülse (12) in eine passende Aussparung (23) des Adapters (10) hineinragt, und der Adapter (10) mit Aussparung (23) gegenüber der ersten Lasche (16) axial verschieblich ist.

2. Vorrichtung nach Anspruch 1, **dadurch gekennzeichnet, dass** die erste und die zweite Lasche (16, 17) der Klemmhülse (12) an einem einzigen Rand (18) der Klemmhülse (12) angeordnet sind.

3. Vorrichtung nach Anspruch 1, **dadurch gekennzeichnet, dass** die erste und die zweite Lasche (16, 17) der Klemmhülse (12) an Rändern (18, 19) der Klemmhülse (12) angeordnet sind, die in einem Winkel zueinanderstehen.

## Claims

1. Device for self-adjustment of an engine speed pulse generator (7) relative to a rotor (8), comprising:
- an engine speed pulse generator (7) with a cylindrical sensor head (9) and an adapter leading to a measurement and supply cable (11),
- an elastic clamping sleeve (12) radially enclosing said cylindrical sensor head (9) and supported in a bore (13) of a mount (14) in a force-locking manner, with said clamping sleeve (12) creating press fit of said sensor head (9) in said bore (13), and with said press fit permitting rotation and axial displacement between said mount (14) and said sensor head (9),
**characterized in that**
said engine speed pulse generator (7) is provided with an active orientation-dependent cylindrical sensor head (9) and that said clamping sleeve (12) or said engine speed pulse generator (7) is provided with anti-torsion means (15) to prevent torsion relative to said mount (14), and that said anti-torsion means (15) permit axial displacement of said sensor head (9) in said clamping sleeve (12) relative to said rotor (8) for self-adjustment, while retaining the radial arrangement or orientation of said sensor head (9) relative to said rotor (8), where the clamping sleeve (12) is stamped from a spring-elastic metal plate or from a spring-elastic sheet metal and is provided with two tongues (16, 17) for the anti-torsion function (15), with a first tongue (16) being engaged within said adapter (10) of said engine speed pulse generator (7) and with a second tongue being engaged in said mount (14) and wherein said second tongue (17) of said clamping sleeve (12) is fixed in a matching recess (22) of said mount (14), and that said first tongue (16) of said clamping sleeve (12) protrudes into a matching recess (25) of said adapter (10) and wherein said adapter (10) with the recess (23) is axially displaceable relative to said first tongue (16).

2. Device according to Claim 1,
**characterized in that**
said first and second tongues (16, 17) of said clamping sleeve (12) are disposed on a single edge (18) of said clamping sleeve (12).

3. Device according to Claim 1,
**characterized in that**
said first and second tongues (16, 17) of said clamping sleeve (12) are disposed on edges (18, 20) of said clamping sleeve (12), which are oriented at an angle relative to each other.

## Revendications

1. Dispositif d'auto-ajustage d'un capteur de vitesse de rotation par impulsions (7) par rapport à un rotor (8), comprenant :
- un capteur de vitesse de rotation par impulsions (7) à une tête de capteur cylindrique (9) et à un adaptateur menant à un câble de mesure et d'alimentation (11),
- une douille de serrage élastique (12) radialement renfermant ladite tête de capteur cylindrique (9) et s'appuyant dans un forage (13) d'un support (14) par adhérence, à ladite douille de serrage (12) créant un ajustement serré de ladite tête de capteur (9) dans ledit forage (13), et audit ajustement serré permettant la rotation et un déplacement axial entre ledit support (14) et ladite tête de capteur (9),
**caractérisé en ce**
**que** ledit capteur de vitesse de rotation par impulsions (7) est muni d'une tête de capteur active cylindrique (9), qui répond à l'orientation, et en ce que ladite douille de serrage (12) ou ledit capteur de vitesse de rotation par impulsions (7) est muni des moyens anti-rotation (15) afin d'empêcher de torsion par rapport audit support (14), et en ce que lesdits moyens anti-rotation (15) permettent un déplacement axial de ladite tête de capteur (9) dans ladite douille de serrage (12) par rapport audit rotor (8) d'auto-ajustage, en maintenant l'arrangement radial ou l'orientation radiale de ladite tête de capteur (9) par rapport audit rotor (8) et en que ladite douille de serrage (12) est découpée dans une plaque métallique élastique ou dans une tôle élastique et en que ladite douille de serrage (12) est munie de deux languettes (16, 17) pour la fonction anti-rotation (15), à une première languette (16) se trouvant en prise dans ledit adaptateur (10) dudit capteur de vitesse de rotation par impulsions (7) et à une deuxième languette (17) se trouvant en prise dans ledit support (14) et que ladite deuxième languette (17) de ladite douille de serrage (12) est fixée dans une découpe appropriée (22) dudit support (14), et en ce que ladite première languette (16) de ladite douille de serrage (12) fait saillie dans une découpe appropriée (25) dudit adaptateur (10) et en que ledit adaptateur (10) avec la découpe (23) est déplaçable en sens axial par rapport à ladite première languette (16).

2. Dispositif selon la revendication 1,
**caractérisé en ce**
**que** lesdites première et deuxième languettes (16, 17) de ladite douille de serrage (12) sont disposées sur un seul bord (18) de ladite douille de serrage (12).

3. Dispositif selon la revendication 1,
**caractérisé en ce**
**que** lesdites première et deuxième languettes (16, 17) de ladite douille de serrage (12) sont disposées sur des bords (18, 20) de ladite douille de serrage (12), qui sont orientés à un angle l'un par rapport à l'autre.
